# EUROPEAN PATENT SPECIFICATION

(11) **EP 4 360 996 B1**
(45) Date of publication and mention of the grant of the patent: **29.04.2026**
(21) Application number: 21947183.6
(22) Date of filing: 25.06.2021
(51) Int. Cl.: B62D 5/04, B62D 1/189

(54) **STEERING DEVICE**
LENKVORRICHTUNG
DISPOSITIF DE DIRECTION

(43) Date of publication of application: 01.05.2024
(73) Proprietor: JTEKT CORPORATION, Kariya-shi, Aichi-ken, 448-8652 (JP)
(72) Inventor: KAWAMURA Naofumi, Kariya-shi, Aichi 448-8652 (JP); SUZUKI Hiroaki, Kariya-shi, Aichi 448-8652 (JP); EBISU Tetsuya, Kariya-shi, Aichi 448-8652 (JP); FUJIOKA Yuki, Kariya-shi, Aichi 448-8652 (JP); SUGIURA Tomonori, Kariya-shi, Aichi 448-8652 (JP); ITO Kosuke, Kariya-shi, Aichi 448-8652 (JP); BAITO Takahiro, Kosai-shi, Shizuoka 431-0431 (JP); NAKAAKI Takao, Kosai-shi, Shizuoka 431-0431 (JP); MURAKAMI Yoshiaki, Kosai-shi, Shizuoka 431-0431 (JP); ASAKAWA Kazuhisa, Yao-shi, Osaka 581-0091 (JP)
(74) Representative: Winter, Brandl - Partnerschaft mbB
(86) International application number: PCT/JP2021/024116
(87) International publication number: WO 2022/269900

(56) References cited:
- WO-A1-2014/069423
- JP-A- 2014 227 040
- JP-A- 2016 156 383
- JP-A- 2017 024 702
- US-B1- 8 584 359

## Description

### TECHNICAL FIELD

The present disclosure relates to a steering device.

### BACKGROUND ART

There has hitherto been an electric power steering system that assists in operating a steering wheel using a motor. An electric power steering system according to JP 2013-71590 A, for example, includes an electric assist device. The electric assist device includes a motor and a housing. The housing supports the motor. A speed reducer of a worm type is housed inside the housing. Torque of the motor is transferred to a steering shaft via the speed reducer.

The housing includes a first housing member and a second housing member. The first housing member and the second housing member are fitted with each other in the axial direction of the steering shaft. A cylindrical steering column is coupled to a side surface of the first housing member on the opposite side of the second housing member by a bolt. The steering shaft is rotatably supported inside the steering column.

### Related Art Documents

Known electric power steering systems are disclosed, for example, in JP 2013-71590 A and JP 2014-227040 A.

### SUMMARY OF THE INVENTION

### Problem to be Solved by the Invention

The electric power steering system according to JP 2013-71590 A involves the following apprehension. That is, when the coaxiality between the first housing member and the steering column is not secured, the coaxiality between a member provided inside the first housing member and a member provided inside the steering column that should be positioned on the same line as each other is also not secured.

Therefore, it is necessary to perform so-called centering when attaching the steering column to the first housing member. The term "centering" refers to the work of adjusting the relative positional relationship between the first housing member and the steering column such that the axis of the first housing member and the axis of the steering column are positioned on the same line. However, the centering work is troublesome.

### Means for Solving the Problem

A steering device according to an aspect of the present disclosure includes: a cylindrical support tube that includes a flange that supports a steering shaft such that the steering shaft is rotatable; a speed reducer configured to apply torque to the steering shaft; a housing that includes a cylindrical portion that houses the speed reducer, the cylindrical portion being disposed coaxially with the flange; and a bolt that couples the flange and the cylindrical portion to each other. The flange and the cylindrical portion include an engagement portion, at which the flange and the cylindrical portion are engaged with each other in a radial direction of the flange, at a different location from a location at which the bolt is provided. The engagement portion includes a plurality of regulation portions provided on an outer peripheral surface of one of the cylindrical portion and the flange; the regulation portions are spaced from each other in a circumferential direction of the cylindrical portion and the flange; and the regulation portions each include an inside surface that faces and is engaged with an outer peripheral surface of the other of the cylindrical portion and the flange in the radial direction of the flange.

### BRIEF DESCRIPTION OF THE DRAWINGS

[FIG. 1] FIG. 1 is a schematic diagram illustrating the configuration of a steering device according to an embodiment.
[FIG. 2] FIG. 2 is a perspective view illustrating a state in which a steering column and a housing in FIG. 1 are coupled.
[FIG. 3] FIG. 3 is a perspective view illustrating a coupling portion between the housing and a lower tube in FIG. 2.
[FIG. 4] FIG. 4 is a perspective view of the housing in FIG. 2.
[FIG. 5] FIG. 5 is a plan view of the housing in FIG. 2.
[FIG. 6] FIG. 6 is a plan view illustrating the profile of the housing in FIG. 2.
[FIG. 7] FIG. 7 is a perspective view illustrating a coupling portion between a steering column and a housing according to a comparative example.
[FIG. 8] FIG. 8 is a half sectional view of the steering column and the housing according to the comparative example, taken along the axes thereof.
[FIG. 9] FIG. 9 is a plan view illustrating the profile of a housing according to a different embodiment.
[FIG. 10] FIG. 10 is a plan view of a housing according to a different embodiment.
[FIG. 11] FIG. 11 is a perspective view illustrating a coupling portion between a steering column and a housing according to a different embodiment.

### MODES FOR CARRYING OUT THE INVENTION

A steering device according to an embodiment will be described.

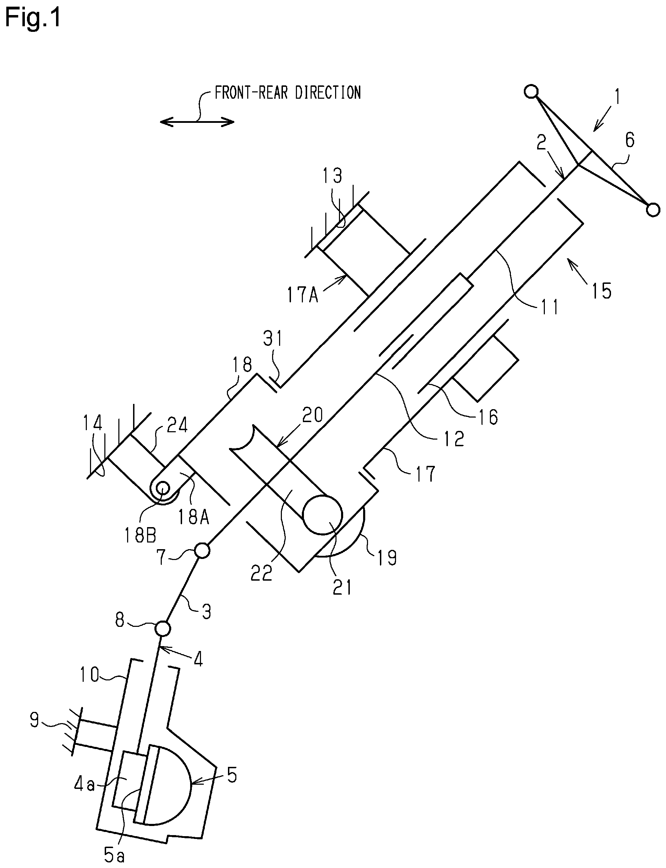

As illustrated in FIG. 1, the steering device 1 includes a steering shaft 2, an intermediate shaft 3, a pinion shaft 4, and a rack shaft 5. A steering wheel 6 is coupled to a first end portion of the steering shaft 2. A first end portion of the intermediate shaft 3 is coupled to a second end portion of the steering shaft 2 via a universal joint 7. A first end portion of the pinion shaft 4 is coupled to a second end portion of the intermediate shaft 3 via a universal joint 8. A pinion 4a is provided at a second end portion of the pinion shaft 4. The pinion 4a is meshed with a rack 5a provided on a rack shaft 5. The rack shaft 5 is supported inside a housing 10 fixed to a frame 9 of a vehicle body. The rack shaft 5 is movable in the right direction or the left direction with respect to the advancing direction of a vehicle. Both end portions of the rack shaft 5 are coupled to right and left steered wheels (not illustrated) via tie rods (not illustrated).

The steering shaft 2 includes an outer shaft 11 and an inner shaft 12. The outer shaft 11 and the inner shaft 12 are coupled to each other by a spline connection, for example. The outer shaft 11 and the inner shaft 12 are rotatable together and relatively movable along the axial direction. The steering shaft 2 is provided obliquely with respect to the front-rear direction of a vehicle with the steering wheel 6 facing upward.

The steering device 1 includes a steering column 15. The steering shaft 2 is inserted through the steering column 15. The steering shaft 2 is supported so as to be rotatable with respect to the steering column 15 via a bearing (not illustrated). The steering column 15 is attached to two frames 13 and 14 provided on the vehicle body. One frame 13 is positioned rearward of the other frame 14 in the front-rear direction of the vehicle.

The steering column 15 includes an upper tube 16, a lower tube 17, and a housing 18. The upper tube 16 is in a cylindrical shape. The lower tube 17 is in a cylindrical shape, and includes a flange 31. The upper tube 16 and the lower tube 17 are fitted with each other. The upper tube 16 is inserted into a first end portion of the lower tube 17, by way of example. The first end portion is an end portion on the opposite side of a second end portion at which the flange 31 is provided. The upper tube 16 and the lower tube 17 are movable relative to each other in the axial direction of the steering shaft 2. The lower tube 17 includes a column bracket 17A. The lower tube 17 is attached to the frame 13 of the vehicle body via the column bracket 17A.

The upper tube 16 and the lower tube 17 constitute a support tube that supports the steering shaft 2 such that the steering shaft 2 is rotatable.

The housing 18 is coupled to the second end portion of the lower tube 17. The housing 18 includes two support portions 18A (only one is illustrated in FIG. 1) and a support shaft 18B. The two support portions 18A are provided on a surface of the housing 18 on the opposite side of the lower tube 17. The two support portions 18A face each other in the width direction of the vehicle body. The support shaft 18B extends between the two support portions 18A. The support shaft 18B is rotatably coupled to a bracket 24 fixed to the frame 14 of the vehicle body.

A motor 19 that assists in steering is provided outside the housing 18. A speed reducer 20 is housed inside the housing 18. The speed reducer 20 reduces the speed of rotation of the motor 19, and transfers the rotation at the reduced speed to the inner shaft 12. The speed reducer 20 is a worm speed reducer that includes a worm 21 and a worm wheel 22. The worm 21 is coupled to an output shaft (not illustrated) of the motor 19 so as to be rotatable together. The axis of the worm 21 and the axis of the output shaft of the motor 19 are positioned on the same line. The worm wheel 22 is meshed with the worm 21. The worm wheel 22 is provided so as to be rotatable together with the inner shaft 12. The axis of the worm wheel 22 and the axis of the inner shaft 12 are positioned on the same line.

The steering device 1 includes a lock mechanism (not illustrated). The lock mechanism selectively locks and unlocks swing of the steering column 15 about the support shaft 18B and expansion and contraction of the steering column 15 through an operation of a lever (not illustrated). An unlocking operation of the lever enables the steering column 15 to swing with respect to the column bracket 17A about the support shaft 18B. The vertical position of the steering wheel 6 can be adjusted by performing the unlocking operation of the lever and thereafter moving the steering wheel 6 upward or downward. The unlocking operation of the lever also enables the upper tube 16 to move in the axial direction of the steering shaft 2 with respect to the lower tube 17. The position of the steering wheel 6 in the axial direction can be adjusted by performing the unlocking operation of the lever and thereafter moving the steering wheel 6 in the axial direction of the steering shaft 2.

Next, the configuration of the lower tube 17 will be described in detail.

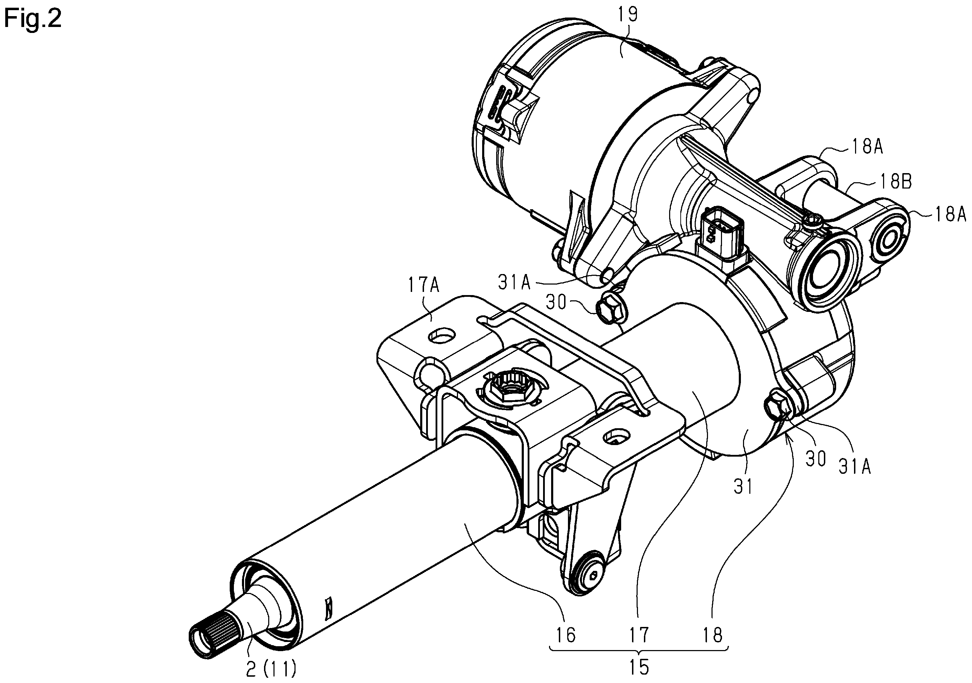

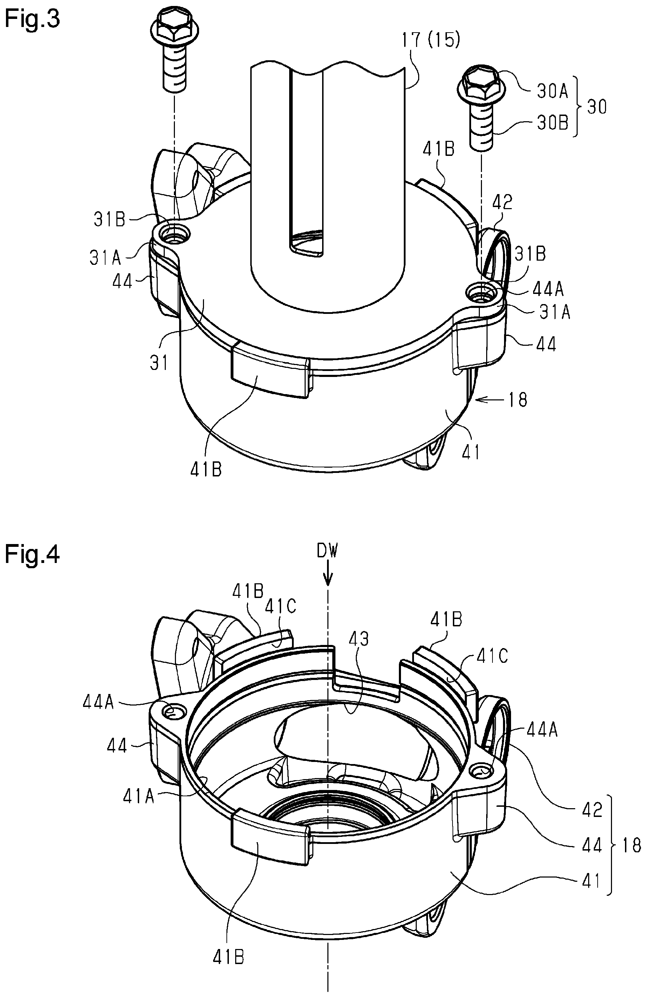

As illustrated in FIG. 2, the lower tube 17 includes a flange 31. The flange 31 is provided at the second end portion of the lower tube 17. The second end portion of the lower tube 17 is an end portion on the opposite side of the first end portion into which the upper tube 16 is inserted. The flange 31 is a flat plate in a circular ring shape. The flange 31 includes two attachment portions 31A. The two attachment portions 31A are provided on the outer peripheral surface of the flange 31. The two attachment portions 31A project radially outward from the outer peripheral surface of the flange 31. The two attachment portions 31A are positioned on the opposite sides of each other in the radial direction of the flange 31. As illustrated in FIG. 3, the two attachment portions 31A each have an insertion hole 31B. A bolt 30 is inserted through the insertion holes 31B. The flange 31 is fixed to the housing 18 by tightening the bolts 30 to the housing 18. The bolts 30 each include a head portion 30A and a shaft portion 30B.

Next, the configuration of the housing 18 will be described in detail.

As illustrated in FIG. 4, the housing 18 includes a worm wheel housing member 41 and a worm housing member 42. The worm wheel housing member 41 is in a cylindrical shape, and has an opening portion 41A. The opening portion 41A opens toward the lower tube 17 along the axis of the worm wheel housing member 41. The outside diameter of the worm wheel housing member 41 is substantially the same as the outside diameter of the flange 31. The worm housing member 42 is coupled to the outer peripheral surface of the worm wheel housing member 41. The worm housing member 42 is in a cylindrical shape, and extends in a direction that is orthogonal to the axis of the worm wheel housing member 41. The inside of the worm wheel housing member 41 and the inside of the worm housing member 42 communicate with each other via a communication hole 43. The worm wheel housing member 41 constitutes a cylindrical portion of the housing 18.

The worm wheel 22 is rotatably housed inside the worm wheel housing member 41. The worm 21 is supported inside the worm housing member 42 so as to be rotatable via a bearing (not illustrated). The worm wheel 22 and the worm 21 are meshed with each other via the communication hole 43 of the housing 18.

The worm wheel housing member 41 includes two tightening portions 44. The tightening portions 44 are each a portion to which the bolt 30 is tightened when fixing the flange 31 to the housing 18. The tightening portions 44 project radially outward from the outer peripheral surface of the worm wheel housing member 41. The two tightening portions 44 are positioned on the opposite sides of each other in the radial direction of the worm wheel housing member 41. The tightening portions 44 each have a screw hole 44A. End surfaces of the tightening portions 44 in which the screw holes 44A open are flush with an end surface of the worm wheel housing member 41 in which the opening portion 41A opens.

The worm wheel housing member 41 includes three regulation portions 41B. The regulation portions 41B are provided on the outer peripheral surface of the worm wheel housing member 41. The regulation portions 41B are in a plate shape, and are curved along the outer peripheral surface of the worm wheel housing member 41. The regulation portions 41B project in an opposite direction of a mounting direction DW of the flange 31 from an end surface of the worm wheel housing member 41 in which the opening portion 41A opens. The mounting direction DW is a direction along the axis of the worm wheel housing member 41, and a direction of getting closer to the worm wheel housing member 41 from a position facing the opening portion 41A. To attach the flange 31 to the worm wheel housing member 41, the flange 31 is moved in the mounting direction DW with respect to the worm wheel housing member 41 to abut against the worm wheel housing member 41. The regulation portions 41B are spaced from each other in the circumferential direction of the worm wheel housing member 41. A regulation surface 41C is provided on the inside surface of each of the regulation portions 41B. The regulation surface 41C is an arcuate surface curved along the outer peripheral surface of the worm wheel housing member 41, and faces radially inward.

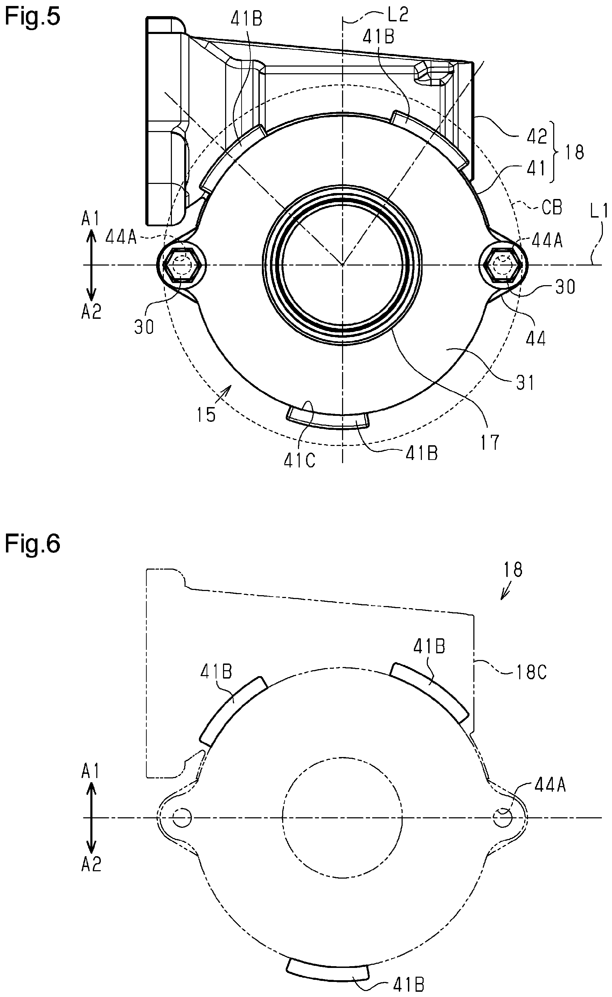

As illustrated in FIG. 5, the worm wheel housing member 41 is divided into two regions A1 and A2 by a line L1 serving as the boundary when seen in the axial direction of the steering column 15. The line L1 passes through the center of the worm wheel housing member 41 in the radial direction and the centers of the two screw holes 44A in the radial direction. The worm housing member 42 is positioned in the region A1. Two of the three regulation portions 41B are positioned in the region A1, and the remaining one is positioned in the region A2.

When seen in the axial direction of the steering column 15, in addition, the two regulation portions 41B in the region A1 are positioned on the opposite sides of each other with respect to a line L2. The line L2 is orthogonal to the line L1, and passes through the center of the worm wheel housing member 41 in the radial direction. The regulation portion 41B in the region A2 is positioned on the line L2. More specifically, the regulation portions 41B are arranged as follows. That is, when seen in the axial direction of the steering column 15, the two regulation portions 41B in the region A1 are positioned in the directions of approximately 10:30 and 1:00 with respect to the center of the worm wheel housing member 41 in the radial direction. The regulation portion 41B in the region A2 is positioned in the direction of approximately 6:00.

When seen in the axial direction of the steering column 15, the regulation portions 41B are positioned inward of a virtual circle CB. The virtual circle CB is a circle that circumscribes the head portions 30A of two bolts 30 positioned in the worm wheel housing member 41 on the opposite sides of each other in the direction along the line L1. As illustrated in FIG. 6, the two regulation portions 41B in the region A1 are positioned inward of a profile 18C of the housing 18 when seen in the axial direction of the housing 18. That is, the two regulation portions 41B in the region A1 do not constitute the profile 18C of the housing 18. On the contrary, the regulation portion 41B in the region A2 constitutes a part of the profile 18C of the housing 18.

### <Method of Assembling Steering Column>

Next, a method of assembling the steering column 15 will be described. The upper tube 16 and the lower tube 17 are assembled in advance.

To couple the lower tube 17 and the housing 18, the flange 31 of the lower tube 17 and the opening portion 41A of the housing 18 are caused to face each other in the axial direction. In this state, the flange 31 and the housing 18 are brought closer to each other along the axial direction. At this time, the flange 31 is disposed in a region surrounded by a plurality of the regulation portions 41B while adjusting the rotational position of the flange 31 such that the insertion holes 31B of the flange 31 and the corresponding screw holes 44A of the housing 18 coincide with each other. Then, the peripheral edge of the flange 31 abuts against an end surface of the worm wheel housing member 41 in which the opening portion 41A opens. While maintaining such a state of abutment, the bolts 30 are inserted through the insertion holes 31B of the flange 31 from the opposite side of the housing 18, and the inserted bolts 30 are tightened to the tightening portions 44 of the housing 18. Consequently, the flange 31 is fixed to the housing 18. That is, the lower tube 17 is coupled to the housing 18 via the flange 31. In addition, the opening portion 41A of the housing 18 is maintained in the state of being blocked by the flange 31. The flange 31 also serves as a cover that blocks the opening portion 41A of the housing 18.

### <Function of Present Embodiment>

Next, the function of the present embodiment will be described.

To assemble the steering column 15, the flange 31 is disposed in a region surrounded by the regulation portions 41B while a portion of the outer peripheral surface of the flange 31 is slid against the regulation surfaces 41C. The regulation portions 41B guide movement of the flange 31 in the axial direction. A plurality of locations of the outer peripheral surface of the flange 31 in the circumferential direction abuts against the regulation surfaces 41C in the radial direction of the flange 31. That is, the flange 31 and the worm wheel housing member 41 include engagement portions, at which the flange 31 and the worm wheel housing member 41 are engaged with each other in the radial direction of the flange 31, at different locations from the locations of the attachment portions 31A and the tightening portions 44 at which the bolts 30 are provided. Consequently, the movement of the flange 31 in the radial direction with respect to the worm wheel housing member 41 is regulated. Therefore, the lower tube 17 and the housing 18 are maintained in the state of being disposed coaxially. Thus, there is no need for the work of adjusting the relative positional relationship between the lower tube 17 and the housing 18 such that the lower tube 17 and the housing 18 are disposed coaxially. Since there is no need to perform so-called centering work, the steering column 15 can be assembled more easily.

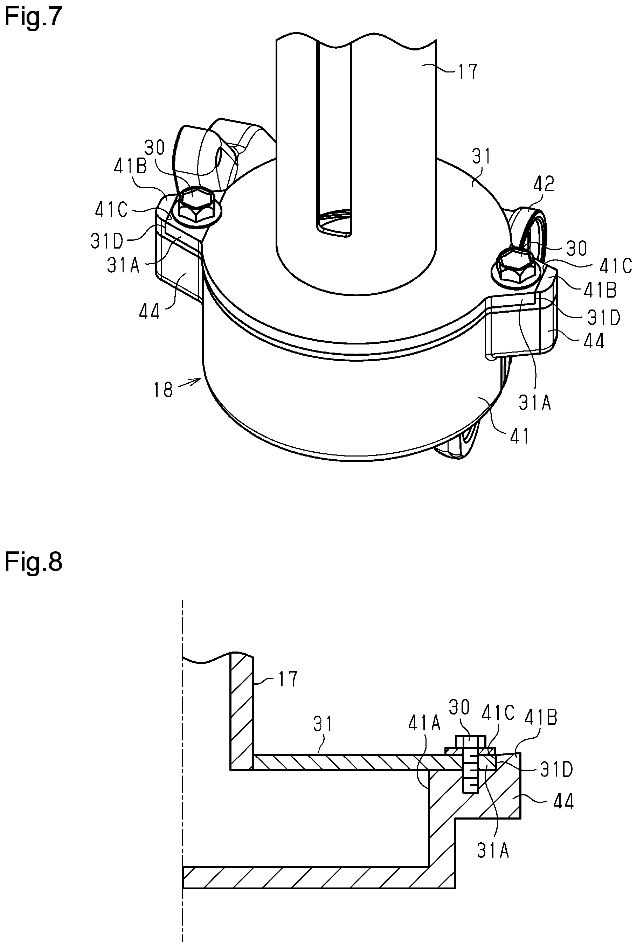

FIG. 7 illustrates the configuration of a comparative example.

As illustrated in FIG. 7, flat surfaces 31D that are orthogonal to the radial direction of the flange 31 are provided at the distal end of the attachment portions 31A of the flanges 31. The regulation portions 41B are provided on the tightening portions 44. The regulation portions 41B are positioned on the outer side in the radial direction of the flange 31 with respect to the corresponding attachment portions 31A of the flange 31. The regulation surfaces 41C are flat surfaces that are parallel to the flat surfaces 31D of the corresponding attachment portions 31A. The regulation surfaces 41C and the flat surfaces 31D are maintained in the state of contacting each other with the lower tube 17 and the housing 18 assembled.

In assembling the lower tube 17 and the housing 18, rotation of the flange 31 about the axis is regulated with the flat surfaces 31D of the flange 31 guided by the corresponding regulation surfaces 41C that are also flat surfaces. Therefore, the attachment posture of the flange 31 in the rotational direction is determined. In addition, the movement of the flange 31 in the radial direction is regulated with the flat surfaces 31D abutting against the corresponding regulation surfaces 41C in the radial direction of the flange 31. Therefore, the lower tube 17 and the housing 18 are maintained in the state of being disposed coaxially.

This comparative example can also eliminate the need for so-called centering work. However, this comparative example involves the following apprehension.

As illustrated in FIG. 8, the regulation portions 41B are positioned on the outer side in the radial direction of the flange 31 with respect to the attachment portions 31A of the flange 31. Therefore, the size of the worm wheel housing member 41 in the radial direction is increased by an amount corresponding to the thickness of the regulation portions 41B in the radial direction of the worm wheel housing member 41.

In the present embodiment, in this respect, the engagement portions of the flange 31 and the worm wheel housing member 41, that is, the regulation portions 41B, are positioned away from the locations at which the bolts 30 are provided in the circumferential direction of the flange 31 and the worm wheel housing member 41. Therefore, the regulation portions 41B can be positioned inward of the virtual circle CB that circumscribes the head portions 30A of the two bolts 30 when seen in the axial direction of the worm wheel housing member 41. Therefore, an increase in the size of the worm wheel housing member 41 in the radial direction can be suppressed compared to the comparative example in which the regulation portions 41B are positioned on the outer side in the radial direction of the flange 31 with respect to the attachment portions 31A of the flange 31.

### <Effects of Embodiment>

According to the present embodiment, the following effects can be obtained.
(1) When assembling the lower tube 17 and the housing 18, the movement of the flange 31 along the axial direction is guided by the regulation portions 41B. That is, the movement of the flange 31 in the radial direction is regulated by the regulation portions 41B. Therefore, the lower tube 17 and the housing 18 are maintained in the state of being disposed coaxially. There is no need to perform so-called centering work, thereby improving the efficiency in the work of assembling the lower tube 17 and the housing 18. Thus, the steering column 15 can be assembled more easily.
(2) The worm wheel housing member 41 includes the regulation portions 41B at different locations from the locations of the tightening portions 44 through which the bolts 30 are passed. Therefore, the regulation portions 41B can be provided so as to be positioned inward of the virtual circle CB that circumscribes the head portions 30A of the two bolts 30 when seen in the axial direction of the steering column 15. Thus, an increase in the size of the worm wheel housing member 41 in the radial direction can be suppressed compared to when the regulation portions 41B are provided to protrude outward of the virtual circle CB as in the comparative example in FIG. 7. In addition, the installation space for the steering device 1 in the vehicle can be secured easily.
(3) The two regulation portions 41B in the region A1 are positioned inward of the profile 18C of the housing 18 when seen in the axial direction of the housing 18. That is, the two regulation portions 41B in the region A1 do not constitute the profile 18C of the housing 18. Therefore, interference between the regulation portions 41B and the other parts can be suppressed during the work of assembling the steering device 1 or the work of attaching the steering device 1 to the vehicle.
(4) The three regulation portions 41B are spaced from each other in the circumferential direction of the worm wheel housing member 41. That is, the flange 31 is supported from three different radial directions. Therefore, the movement of the flange 31 in the radial direction can be regulated appropriately when assembling the lower tube 17 and the housing 18.
(5) The three regulation portions 41B are provided in a distributed manner in the two regions A1 and A2 of the worm wheel housing member 41 divided by the line L1 serving as the boundary when seen in the axial direction of the worm wheel housing member 41. Therefore, the flange 31 can be supported from significantly different directions. Thus, the movement of the flange 31 in the radial direction can be regulated more appropriately.

### <Other Embodiments>

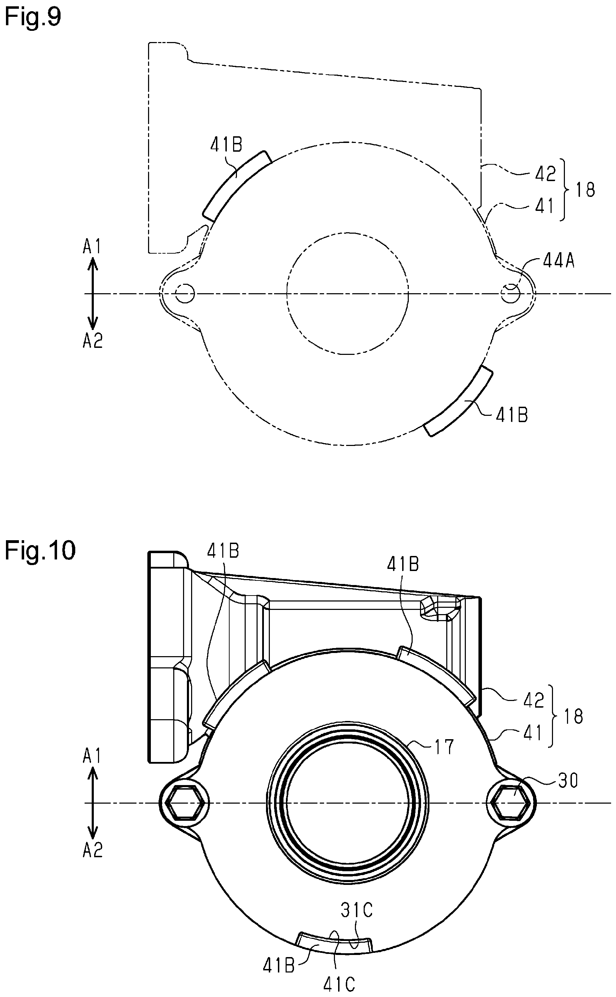

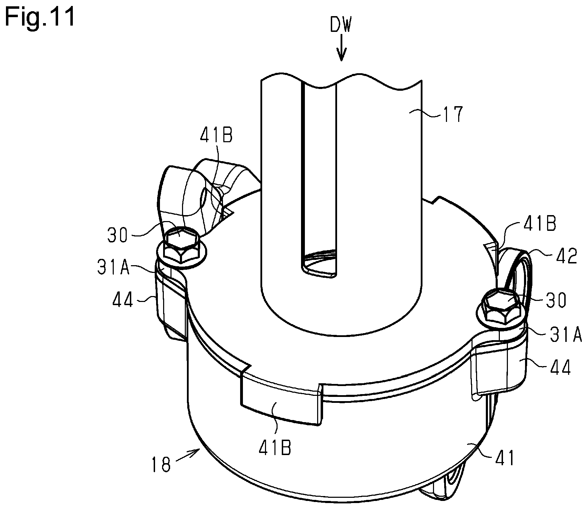

The present embodiment may be modified as follows.
- As illustrated in FIG. 9, the worm wheel housing member 41 may include two regulation portions 41B. In this case, the two regulation portions 41B are preferably positioned on the opposite sides of each other in the radial direction of the worm wheel housing member 41. For example, when seen in the axial direction of the worm wheel housing member 41, the regulation portion 41B in the region A1 is provided in the direction of approximately 10:30, and the regulation portion 41B in the region A2 is provided in the direction of approximately 4:30, with respect to the center of the worm wheel housing member 41 in the radial direction. This also makes it possible to regulate the movement of the flange 31 in the radial direction when assembling the lower tube 17 and the housing 18. The worm wheel housing member 41 may include four or more regulation portions 41B.
- As illustrated in FIG. 10, the regulation portion 41B in the region A2 may be provided so as not to protrude outward of the outer peripheral surface of the worm wheel housing member 41 when seen in the axial direction of the worm wheel housing member 41. For example, the regulation portion 41B in the region A2 is provided in an end surface of the worm wheel housing member 41 in which the opening portion 41A opens. However, the outside surface of the regulation portion 41B in the region A2 is flush with the outer peripheral surface of the worm wheel housing member 41, or is positioned on the radially inner side with respect to the outer peripheral surface of the worm wheel housing member 41. A notch 31C corresponding to the regulation portion 41B in the region A2 is provided in the peripheral edge portion of the flange 31. When assembling the flange 31 and the housing 18, the regulation portion 41B in the region A2 is housed inside the notch 31C of the flange 31. With this configuration, it is possible to reduce a portion that protrudes outward of the outer peripheral surface of the worm wheel housing member 41. By providing the regulation portion 41B, in addition, the flange 31 cannot be assembled to the housing 18 because of the absence of the notch 31C, even if it is attempted to assemble the flange 31 to the housing 18 as erroneously inverted by 180 degrees. Therefore, erroneous assembly can be suppressed.
- As illustrated in FIG. 11, the regulation portions 41B may be provided on the flange 31. For example, the regulation portions 41B are omitted from the worm wheel housing member 41, and instead coupled to the outer peripheral surface of the flange 31. The flange 31 may be provided integrally with the regulation portions 41B by plastically deforming a metal plate material punched into a predetermined shape. The size of the regulation portions 41B is changeable as appropriate. The regulation portions 41B project in the mounting direction DW of the flange 31 from the back surface of the flange 31 facing the worm wheel housing member 41. This also allows the flange 31 and the worm wheel housing member 41 to include engagement portions, at which the flange 31 and the worm wheel housing member 41 are engaged with each other in the radial direction of the flange 31, at different locations from the locations of the attachment portions 31A and the tightening portions 44 at which the bolts 30 are provided. That is, the regulation portions 41B of the flange 31 abut, in the radial direction of the flange 31, against the outer peripheral surface of the worm wheel housing member 41 at a plurality of locations in the circumferential direction. Therefore, the movement of the flange 31 in the radial direction is regulated when assembling the lower tube 17 and the housing 18. The regulation portions 41B may be provided on both the worm wheel housing member 41 and the flange 31.
- The steering device 1 may not be provided with components for adjusting the vertical position of the steering wheel 6, or components for adjusting the position of the steering wheel 6 in the axial direction, depending on the product specifications etc. In this case, a single support tube that is not expandable or contractible is provided in place of the upper tube 16 and the lower tube 17. This single support tube supports the steering shaft 2 such that the steering shaft 2 is rotatable. In addition, the housing 18 is fixed to the frame 14 of the vehicle body. The support portions 18A and the support shaft 18B can be omitted from the housing 18. In addition, there is no need for a lock mechanism that selectively locks and unlocks swing of the steering column 15 about the support shaft 18B and expansion and contraction of the steering column 15.

## Claims

1. A steering device (1) comprising:
a cylindrical support tube (17) that includes a flange (31) and that supports a steering shaft (2) such that the steering shaft (2) is rotatable;
a speed reducer (20) configured to apply torque to the steering shaft (2);
a housing (18) that includes a cylindrical portion (41) that houses the speed reducer (20), the cylindrical portion (41) being disposed coaxially with the flange (31); and
a bolt (30) that couples the flange (31) and the cylindrical portion (41) to each other, wherein the flange (31) and the cylindrical portion (41) include an engagement portion, at which the flange (31) and the cylindrical portion (41) are engaged with each other in a radial direction of the flange (31), at a different location from a location at which the bolt (30) is provided, **characterized in that**:
the engagement portion includes a plurality of regulation portions (41B) provided on an outer peripheral surface of one of the cylindrical portion (41) and the flange (31);
the regulation portions (41B) are spaced from each other in a circumferential direction of the cylindrical portion (41) and the flange (31); and
the regulation portions (41B) each include an inside surface that faces and is engaged with an outer peripheral surface of the other of the cylindrical portion (41) and the flange (31) in the radial direction of the flange.

2. The steering device (1) according to claim 1, wherein the engagement portion is positioned at a location away from the location at which the bolt (30) is provided in a circumferential direction of the support tube (17).

3. The steering device (1) according to claim 1 or 2, wherein:
the bolt (30) includes a plurality of bolts (30);
the bolts (30) are spaced from each other along a circle centered on an axis of the support tube (17);
the bolts (30) each include a head portion (30A) and a shaft portion (30B); and
the engagement portion is positioned inward of a virtual circle that circumscribes head portions (30A) of the bolts (30) when seen in an axial direction of the support tube (17).

4. The steering device (1) according to any one of claims 1 to 3, wherein the engagement portion is positioned inward of a profile of the housing (18) when seen in an axial direction of the support tube (17).

5. The steering device (1) according to any one of claims 1 to 4, wherein at least a part of the regulation portions (41B) is positioned inward of a profile of the housing (18) when seen in an axial direction of the support tube (17).

6. The steering device (1) according to any one of claims 1 to 5, wherein:
the speed reducer (20) includes a worm wheel (22) that rotates together with the steering shaft (2) and a worm (21) to be meshed with the worm wheel (22);
the housing (18) includes a worm wheel housing member that houses the worm wheel (22) and a worm housing member (42) that houses the worm (21); and
the cylindrical portion (41) is the worm wheel housing member.

## Patentansprüche

1. Lenkvorrichtung (1), mit:
einem zylindrischen Stützrohr (17), das einen Flansch (31) enthält und das eine Lenkwelle (2) so stützt, dass die Lenkwelle (2) drehbar ist;
einem Drehzahlminderer (20), der konfiguriert ist, um ein Drehmoment auf die Lenkwelle (2) auszuüben;
einem Gehäuse (18), das einen zylindrischen Abschnitt (41) enthält, der den Drehzahlminderer (20) aufnimmt, wobei der zylindrische Abschnitt (41) koaxial mit dem Flansch (31) angeordnet ist; und
einem Bolzen (30), der den Flansch (31) und den zylindrischen Abschnitt (41) miteinander koppelt,
wobei der Flansch (31) und der zylindrische Abschnitt (41) einen Eingriffsabschnitt enthalten, an dem der Flansch (31) und der zylindrische Abschnitt (41) miteinander in einer radialen Richtung des Flansches (31) an einer anderen Stelle als einer Stelle, an der der Bolzen (30) vorgesehen ist, in Eingriff stehen,
**dadurch gekennzeichnet, dass**:
der Eingriffsabschnitt eine Vielzahl von Regulierungsabschnitten (41B) enthält, die an einer Außenumfangsfläche von einem von dem zylindrischen Abschnitt (41) und dem Flansch (31) vorgesehen sind;
die Regulierungsabschnitte (41B) voneinander in einer Umfangsrichtung des zylindrischen Abschnitts (41) und des Flansches (31) beabstandet sind; und
die Regulierungsabschnitte (41B) jeweils eine Innenfläche enthalten, die einer Außenumfangsfläche des anderen von dem zylindrischen Abschnitt (41) und dem Flansch (31) in der radialen Richtung des Flansches zugewandt ist und mit dieser in Eingriff steht.

2. Lenkvorrichtung (1) nach Anspruch 1, wobei der Eingriffsabschnitt an einer Stelle entfernt von der Stelle, an der der Bolzen (30) vorgesehen ist, in einer Umfangsrichtung des Stützrohrs (17) positioniert ist.

3. Lenkvorrichtung (1) nach Anspruch 1 oder 2, wobei:
der Bolzen (30) eine Vielzahl von Bolzen (30) enthält;
die Bolzen (30) voneinander entlang eines Kreises beabstandet sind, der auf einer Achse des Stützrohrs (17) zentriert ist;
die Bolzen (30) jeweils einen Kopfabschnitt (30A) und einen Schaftabschnitt (30B) enthalten; und
der Eingriffsabschnitt innerhalb eines virtuellen Kreises positioniert ist, der Kopfabschnitte (30A) der Bolzen (30) umgibt, wenn er in einer axialen Richtung des Stützrohrs (17) betrachtet wird.

4. Lenkvorrichtung (1) nach einem der Ansprüche 1 bis 3, wobei der Eingriffsabschnitt innerhalb eines Profils des Gehäuses (18) positioniert ist, wenn er in einer axialen Richtung des Stützrohrs (17) betrachtet wird.

5. Lenkvorrichtung (1) nach einem der Ansprüche 1 bis 4, wobei zumindest ein Teil der Regulierungsabschnitte (41B) innerhalb eines Profils des Gehäuses (18) positioniert ist, wenn er in einer axialen Richtung des Stützrohrs (17) betrachtet wird.

6. Lenkvorrichtung (1) nach einem der Ansprüche 1 bis 5, wobei:
der Drehzahlminderer (20) ein Schneckenrad (22), das sich zusammen mit der Lenkwelle (2) dreht, und eine Schnecke (21), die mit dem Schneckenrad (22) in Eingriff zu bringen ist, enthält;
das Gehäuse (18) ein Schneckenradgehäuseelement, das das Schneckenrad (22) aufnimmt, und ein Schneckengehäuseelement (42), das die Schnecke (21) aufnimmt, enthält; und
der zylindrische Abschnitt (41) das Schneckenradgehäuseelement ist.

## Revendications

1. Dispositif de direction (1), comprenant :
un tube de support cylindrique (17) qui inclut une bride (31) et qui supporte un arbre de direction (2) de telle sorte que l'arbre de direction (2) soit rotatif ;
un réducteur de vitesse (20) configuré pour appliquer un couple à l'arbre de direction (2) ;
un boîtier (18) qui inclut une partie cylindrique (41) qui loge le réducteur de vitesse (20), la partie cylindrique (41) étant disposée coaxialement avec la bride (31) ; et
un boulon (30) qui couple la bride (31) et la partie cylindrique (41) l'une à l'autre, dans lequel la bride (31) et la partie cylindrique (41) incluent une partie de mise en prise, au niveau de laquelle la bride (31) et la partie cylindrique (41) sont mises en prise l'une avec l'autre dans une direction radiale de la bride (31), à un emplacement différent d'un emplacement au niveau duquel le boulon (30) est prévu, **caractérisé en ce que** :
la partie de mise en prise inclut une pluralité de parties de régulation (41B) prévues sur une surface périphérique extérieure de l'une de la partie cylindrique (41) et de la bride (31) ;
les parties de régulation (41B) sont espacées les unes des autres dans une direction circonférentielle de la partie cylindrique (41) et de la bride (31) ; et
les parties de régulation (41B) incluent chacune une surface intérieure qui fait face et est mise en prise avec une surface périphérique extérieure de l'autre de la partie cylindrique (41) et de la bride (31) dans la direction radiale de la bride.

2. Dispositif de direction (1) selon la revendication 1, dans lequel la partie de mise en prise est positionnée à un emplacement éloigné de l'emplacement au niveau duquel le boulon (30) est prévu dans une direction circonférentielle du tube de support (17).

3. Dispositif de direction (1) selon la revendication 1 ou 2, dans lequel :
le boulon (30) inclut une pluralité de boulons (30) ;
les boulons (30) sont espacés les uns des autres le long d'un cercle centré sur un axe du tube de support (17) ;
chaque boulon (30) inclut une partie de tête (30A) et une partie de tige (30B) ; et
la partie de mise en prise est positionnée à l'intérieur d'un cercle virtuel qui circonscrit les parties de tête (30A) des boulons (30) en regardant dans une direction axiale du tube de support (17).

4. Dispositif de direction (1) selon l'une quelconque des revendications 1 à 3, dans lequel la partie de mise en prise est positionnée à l'intérieur d'un profil du boîtier (18) en regardant dans une direction axiale du tube de support (17).

5. Dispositif de direction (1) selon l'une quelconque des revendications 1 à 4, dans lequel au moins une partie des parties de régulation (41B) est positionnée à l'intérieur d'un profil du boîtier (18) en regardant dans une direction axiale du tube de support (17).

6. Dispositif de direction (1) selon l'une quelconque des revendications 1 à 5, dans lequel :
le réducteur de vitesse (20) inclut une roue à vis sans fin (22) qui tourne avec l'arbre de direction (2) et une vis sans fin (21) qui s'engrène avec la roue à vis sans fin (22) ;
le boîtier (18) inclut un élément de boîtier de roue à vis sans fin qui loge la roue à vis sans fin (22) et un élément de boîtier de vis sans fin (42) qui loge la vis sans fin (21) ; et
la partie cylindrique (41) est l'élément de boîtier de roue à vis sans fin.
